# EUROPÄISCHE PATENTSCHRIFT

(11) **EP 1 203 184 B1**
(45) Veröffentlichungstag und Bekanntmachung des Hinweises auf die Patenterteilung: **03.03.2004**
(21) Anmeldenummer: 00960459.6
(22) Anmeldetag: 16.08.2000
(51) Int. Cl.: F16L 59/12

(54) **ISOLIERMANTEL FÜR ELEKTROFILTER**
INSULATING ENCLOSURE FOR AN ELECTROSTATIC PRECIPITATOR
ENVELOPPE ISOLANTE POUR FILTRE ELECTRIQUE

(30) Priorität: 19.08.1999 DE 19938834
(43) Veröffentlichungstag der Anmeldung: 08.05.2002
(73) Patentinhaber: Rheinhold & Mahla AG, 80992 München (DE)
(72) Erfinder: BUCK, Klaus, Dieter, 59494 Soest (DE)
(74) Vertreter: Rau, Albrecht
(86) Internationale Anmeldenummer: PCT/EP2000/007959
(87) Internationale Veröffentlichungsnummer: WO 2001/014784

(56) Entgegenhaltungen:
- WO-A-88/03630
- DE-A- 3 345 966
- DE-A- 4 435 837
- US-A- 4 152 873

## Beschreibung

Die Erfindung betrifft einen Isoliermantel für Wandungen gemäß dem Oberbegriff des Anspruches 1.

Isoliermäntel finden in der Industrie vielseitig Verwendung, um Temperaturverluste von Bauwerken oder Anlagen einzuschränken. Dabei gilt es zu verhindern, daß Wärme oder Kälte im Übermaß abstrahlt. Unter anderem werden solche Anforderungen auch an Elektrofilter gestellt, welche insbesondere zur Reinigung von Gasen dienen. Hier gilt es, eine hohe Betriebstemperatur zu erreichen, was auf wirtschaftliche Weise nur gewährleistet werden kann, wenn zu hohe Wärmeverluste vermieden werden. In diesem Zusammenhang ist es bekannt, Dämmstoffe, wie beispielsweise Mineralfasern, an an der Außenwand des Filtergehäuses angebrachten Trägem zu befestigen. Diese sind als Matten oder Bahnen ausgebildet und werden auf die Wandung geklebt oder mechanisch befestigt. Im Bereich der Träger bleibt nichts anderes übrig, als entweder den Träger an dieser Stelle das Dämmmaterial durchdringen zu lassen oder den Träger abzudekken, wodurch natürlich eine Erhebung entsteht. Beides führt zwangsläufig zur Bildung von Wärmebrücken und somit hohen Energieverlusten. Dies gilt um so mehr, als die faserige Wärmedämmung über Blechbahnen oder - platten in einem weiteren Arbeitsgang gegen Durchfeuchtung zu schützen ist. Dadurch wird die Problematik noch verstärkt, weil auch diese Bleche wiederum den durch die Träger vorgegebenen Konturen angepaßt werden müssen. Es liegt auf der Hand, daß für diese Arbeiten ein erheblicher handwerklicher Aufwand notwendig ist, der trotzdem nicht zu zufriedenstellenden Ergebnissen führt da auf einer solch großen Fläche, wie sie die Außenwandung eines Elektrofilters darstellt, eine Vielzahl von Wärmebrücken verbleibt. Weitere Probleme ergeben sich dadurch, daß es infolge der extrem hohen Temperaturen zu großen thermischen Belastungen und ungleichmäßigen Dehnungen dieser Isoliermäntel kommt, welche die Einsatzdauer der auf die beschriebene Weise hergestellten Isoliermäntel stark begrenzt. Vor allem an Ecken, Rundungen, Öffnungen und Stellen ungleichmäßiger Kontur ist die Wärmedämmung nur bedingt tauglich. Größere Objekte müssen über mehrere Tage lang eingerüstet werden.

Aus der DE 33 45 966 A1 ist eine Haltevorrichtung für Elemente einer Dämmung bekannt. Die einzelnen Dämmelemente weisen vorstehende Hakenelemente auf, die zum Verbinden zweier benachbart angeordneter Dämmelemente miteinander verschraubt sind. Die Dämmelemente sind über die Hakenelemente an Trägern einhängbar.

Aus der US 4 152 873 ist eine Befestigungsvorrichtung für Gipsplatten bekannt. Die Befestigungsvorrichtungen sind zweiteilig ausgebildet, wobei ein Befestigungsteil an einer Gipsplatte und das andere Befestigungsteil an einer parallel angeordneten Gipsplatte oder an einer Wandung befestigt ist. Die Verbindung der beiden Befestigungsteile erfolgt mittels Hot-Melt-Kleber oder mittels Lot.

Aus der DE 44 35 837 A1 ist ein Verfahren zur Befestigung von Verkleidungsplatten bekannt. Die Verkleidungsplatten werden an einer Unterkonstruktion angeschraubt.

Nachteilig bei diesen bekannten Ausgestaltungen ist der hohe Zeitaufwand zum Verbinden zweier benachbarter Elemente bzw. das Verbinden eines Elements mit einer Wandung.

Aus der WO 88/03 630 A1 ist eine Isolierung für einen Speicherbehälter bekannt. Die Isolierung besteht aus einzelnen Platten, die durch Feder/Nutverbindungen aneinander befestigt sind. Die Federn und die Nuten sind kreisbogenförmig ausgestaltet, um sich in radialer Richtung dem zylindrischen Speicherbehälter möglichst gut anpassen zu können.

Der Erfindung stellt sich somit die Aufgabe, ein flexibel einsetzbares und kostengünstiges Isoliersystem zu schaffen, daß die Entstehung von Wärmebrücken praktisch ausschließt und mit geringem Aufwand installierbar ist.

Diese Aufgabe wird durch die Merkmale des kennzeichnenden Teils des Anspruches 1 gelöst.

Mit der erfindungsgemäßen Isolierung ist es möglich, modulartige Baueinheiten zu schaffen, die eine hohe Eigenstabilität aufweisen und dabei extrem hohen thermischen Belastungen standhalten können. Die zu dämmende Wandung wird mit einer völlig gleichmäßigen Isolierung versehen, wobei etwaige von der Wandung vorstehende Bauteile, wie Träger, ebenso von Wärmedämmung bzw. dem feuchtigkeitsabweisenden Blech überdeckt sind. Die Gefahr der Entstehung von Wärmebrücken ist minimiert, eine Unterkonstruktion ist nicht notwendig. Die Baueinheiten weisen an ihrer Innenseite Verbinder auf, welche korrespondierend zu den Trägern ausgebildet sind, so daß sich die Baueinheiten in die vorstehenden Teile der Träger einhängen lassen. Auf diese Weise werden die von der Wandung vorstehenden Träger als solche quasi in die Wärmedämmung mit einbezogen. Auch die Konfektionierung der Isoliermäntel wird dadurch deutlich vereinfacht, daß die Baueinheiten vorgefertigt sein können und am zu dämmenden Objekt dann lediglich über die Verbinder an den Trägem eingehakt werden müssen. Auch für schwer zu bearbeitende Stellen wie Ecken, Rundungen, Öffnungen oder besonders weit vorstehende Bauteile können maßgeschneiderte Lösungen geboten werden. Dabei ist es von großem Vorteil, daß diese Arbeiten statt unter Baustellenbedingungen in einer Werkstatt durchgeführt werden können, wobei der Feuchtigkeitsschutz in Form der Bleche gleich mit installiert ist. Da benachbarte Baueinheiten sich in einem gewissen Bereich überlappen, ist auch an diesen Stellen gewährleistet, daß die Wärmedämmung keine Schwachstelle aufweist. Auch der Austausch etwa beschädigter Baueinheiten ist auf unaufwendige Weise durchführbar, da die betreffende Baueinheit einfach ausgewechselt werden kann, ohne daß es zu Beeinträchtigungen des Isoliersystems käme.

Eine besonders kompakte Ausführungsform eines Isoliennantels ist erreicht, wenn der Dämmstoff über eine Rundumabdeckung stabilisiert ist, vorzugsweise durch mit der Außenabdeckung verbundene Stoßbleche und Innenbleche. Die mattenartige Wärmedämmung ist dabei also auf der Außen- und der Innenfläche sowie an ihren Seitenrändern mit Blech überzogen, wodurch eine besonders stabile, unempfindliche und hohen thermischen Belastungen Stand haltende Baueinheit gegeben ist. Über die Gesamtfläche verteilt und auch an den Stößen weist eine solche Baueinheit gleichmäßige Dämmeigenschaften auf, völlig unabhängig davon, ob Träger oder andere vorstehende Bauteile damit überdeckt werden.

Zwischen benachbarten Baueinheiten ist eine besonders gute Verbindung erreicht, wenn die Stöße benachbarter Baueinheiten eine Feder-/Nutverbindung ergebend ausgebildet sind. Damit ist zum einen vermieden, daß an den Stößen Wärmebrücken entstehen, zum anderen ist gewährleistet, daß die benachbarten Baueinheiten an den Seiten ineinandergreifen, so daß sie auch mechanisch verbunden sind. Dabei bleibt ein Auswechseln beschädigter Baueinheiten, auch einzeln, möglich.

Weiterhin ist eine gute Verbindung benachbarter Baueinheiten erreicht, wenn die Stöße stufenartig ineinandergreifend ausgebildet sind. Auch hierfür gilt, daß an den Stößen keine Wärmebrücken entstehen können. Ein weiterer Vorteil ist die einfache Montage, dadurch daß eine Baueinheit im Bereich der Überlappung auf die benachbarte aufgesetzt wird. Thermische Beanspruchungen können vom Gesamtsystem ideal aufgenommen werden, da sich punktuelle und großflächige Belastungen auf das Gesamtsystem verteilen.

Dies wird besonders effektiv erreicht, wenn der Dämmstoff zweilagig ausgebildet ist, wobei beide Lagen leicht zueinander versetzt angeordnet sind und somit an den Stößen der Baueinheit eine stufenartige Ausbildung ergeben. Dies hat insbesondere fertigungstechnische Vorteile, da zwei dünne Dämmmatten zu einer dickeren zusammengesetzt werden, wobei dies eben leicht versetzt geschieht, so daß sich an den Seitenrändern die stufenartige Ausbildung ergibt, die dann ein Ineinandersetzen benachbarter Baueinheiten ermöglicht. Eine Nachbearbeitung der Wärmedämmung an den Seitenrändern ist also nicht notwendig. Es ist ebenso möglich, den Dämmstoff auch drei- oder mehrlagig auszubilden.

Eine bevorzugte Ausführungsform der Erfindung sieht vor, daß die den Stößen zugeordneten Stoßbleche als Glattblech ausgebildet sind. Somit soll ein besonders gutes Ineinandersetzen benachbarter Baueinheiten möglich werden. Etwaige Fehler bei der Installation der Isoliermäntel sind dann aufgrund der ungleichmäßigen Konturen offensichtlich und können entsprechend behoben werden.

Eine besonders vorteilhafte Anordnung der Isoliermäntel ist erreicht, wenn die Träger ein I-, U- oder L-Profil aufweisen und eine Art Wärmeausgleichskanal zwischen Wandung und Isoliermantel bildend angeordnet sind. Durch die Profile werden die Isoliermäntel auf Distanz zur Wandung gehalten. Dadurch bildet sich hinter diesen eine Hinterlüftung, die vorteilhafterweise als Wärmeausgleichskanal benutzt werden kann. Die in diesem Bereich verlaufenden Träger behindern diese Hinterlüftung nicht. Auch hier ist ein erheblicher Vorteil erkennbar, wenn man bedenkt, daß das Dämmmaterial bisher auf die Wandung aufgesetzt wurde, so daß überhaupt keine Hinterlüftung verblieb.

Das im Rahmen der Rundumabdeckung vorgesehene Innenblech am Dämmstoff ist dann besonders vorteilhaft, wenn das Innenblech als Lochblech mit einem zusätzlichen Rieselschutz in Form einer Glasfasermatte ausgestattet ist. Insbesondere wenn an den Isoliermantel auch Anforderungen hinsichtlich Schallschutz gestellt werden, empfiehlt es sich, ein Glasgewebetuch einzusetzen, welches verhindert, daß sich Dämmmaterial löst.

Weiterhin ist vorgesehen, daß der Träger auf der dem Innenblech zugewandten Seite mit einer Glasfaserabdeckung versehen ist. Da es bei dem erfindungsgemäßen Isoliermantel nicht mehr notwendig ist, Elektrofilter einzurüsten, können mit wesentlich weniger Aufwand fahrbare Hebebühnen oder Kräne eingesetzt werden. Von diesen sind die Isoliermäntel mit den Verbindern in die Träger einzuhängen. Damit dieses leichter handhabbar ist, sind die Träger mit Glasfaserabdeckung oder einem anderen, möglichst glatten Material versehen, welches ein Gleiten der Verbinder bzw. der Isoliermäntel über die Träger ermöglicht.

Es ist vorgesehen, daß die Außenabdeckung des Isoliermantels durch ein Blech gebildet ist, wobei Außenabdeckung und Dämmstoff über Befestigungsmittel gemeinsam über die Verbinder befestigt sind. Zur Vermeidung von Wärmebrücken gilt es, Befestigungsmittel nur in sehr geringem Umfang zu verwenden. Aus diesem Grunde ist es besonders zweckmäßig, Außenabdeckung, die diversen Lagen des Dämmstoffes und das Innenblech über dasselbe Verbindungsmittel, vorzugsweise einen Bolzen oder eine Schraube am Verbinder zu fixieren. Ohnehin entfällt gegenüber dem Stand der Technik die Isolierbestiftung, mit der die Dämmung an der Wandung installiert wird. Durch die gemeinsame Fixierung von Außenabdeckung, Dämmstofflagen und Verbinder wird nun erreicht, daß der Dämmstoff lediglich an den konstruktiv notwendigen Stellen durchdrungen wird. Eine Einschränkung der Isolierwirkung findet damit kaum statt.

Eine bevorzugte Ausführungsform der Erfindung sieht vor, daß die Außenabdeckung und das Innenblech als Glattblech ausgebildet und beidseitig verzinkt sind. Eine Profilierung der Außenabdeckung kann entsprechend ausgebildet sein, je nachdem was für eine Konstruktion durchgeführt wird. Bei einer Dachkonstruktion etwa können auch entsprechende Abfluß- oder Regenrinnen ausgebildet sein, um das Wasser abzuführen.

Eine Ableitung von Wasser kann auch dadurch bewirkt werden, daß ein Trapezblech als Außenabdeckung dient. Grundsätzlich ist jegliche Form von Außenabdeckung denkbar, zumal die Baueinheiten vorab werksseitig gefertigt und zusammengesetzt werden.

Zusätzlich ist es möglich, daß das Glattblech eine Profilierung aufweist. Diese dient dazu, ein Ausheulen der Außenabdeckung zu verhindern.

Ein weiterer Vorteil des erfindungsgemäßen Isoliermantels besteht darin, daß es möglich ist, daß der Isoliermantel mit einer Heizleitung ausgerüstet ist. Hierbei ist insbesondere an die Anwendung in einem Elektrofilter gedacht, wo verhindert werden soll, daß die aus den Rohgasen gelösten Schwebstoffe abkühlen und dadurch anbacken. Aus diesem Grunde ist eine Heizung vorgesehen, die speziell im unteren Bereich des Elektrofilters, wo sich Schwebstoffe sammeln, für konstant hohe Temperatur sorgt. Der erfindungsgemäße Isoliermantel kann auch bereits werksseitig mit einer Heizleitung ausgerüstet werden. Zudem verlaufen die Heizleitungen innerhalb der Baueinheit vor äußeren Einflüssen geschützt.

Bevorzugterweise ist dabei vorgesehen, daß die Heizleitung innerhalb des Dämmstoffs verlaufend angeordnet und durch eine oder mehrere Lage Folien von der Außenabdeckung getrennt ausgebildet ist. In diesem Fall werden zwei bisher völlig separate Einrichtungen - Wärmedämmung und Heizung - sinnvollerweise kombiniert, wodurch auch Platz eingespart wird.

Die Erfindung zeichnet sich insbesondere dadurch aus, daß ein Isoliermantel für Wandungen insbesondere von Elektrofiltern geschaffen ist, welcher sich aus Baueinheiten oder Modulen zusammensetzt. Diese sind besonders flexibel handhabbar, da sie aus einem rundum von einem Blechmantel eingefaßten Dämmstoff bestehen und über Verbindungen an ohnehin an der Filterwandung vorhandenen Trägern eingehängt werden können. Die Baueinheiten bilden gewissermaßen eine eigenständige Schalung, so daß durch sie sämtliche An- und Einbauten an der Wandung abgedeckt sind und das Entstehen von Wärmebrücken verhindert wird. Die erfindungsgemäßen Isoliermäntel können in der Werkstatt konfektioniert werden, wobei allenfalls besonders problematische Bereiche wie Öffnungen auf der Baustelle noch zugeschnitten werden müssen. Die Stöße zwischen benachbarten Baueinheiten werden durch Feder-/Nutverbindungen bzw. stufenartig ineinander greifende Ausbildungen realisiert. Somit werden unnötige Temperaturverluste im Bereich der Stöße vermieden, dabei ist gleichzeitig gewährleistet, daß die Dehnungen infolge hoher thermischer Belastung von dem Isoliersystem aufgenommen werden können.

Mit dem erfindungsgemäßen Isoliermantel wird neben einem optimalen Wärmeschutz auch ein sehr guter Schallschutz erreicht. Auch hinsichtlich der Montage ergeben sich deutliche Vorteile dadurch, daß eine Einrüstung der Wandung entfällt, da mit fahrbaren Hebebühnen oder Kränen gearbeitet werden kann, weil standardisierte Modulbauteile Verwendung finden. Eine Unterkonstruktion ist ebenso wenig notwendig, wie die Anbringung einer Isolierbestiftung, weil die Isoliermäntel einfach über Verbinder an die Träger angehängt werden, ohne daß die Träger die Wirkung der Isolierung einschränken können. Die Isoliermäntel selbst werden durch Verbindungsmittel wie Schrauben zusammengehalten, wobei ein einziges Verbindungsmittel zum Fixieren von Dämmstoff, Verbinder, Außenabdeckung und gegebenenfalls Innenblech ausreicht.

Weitere Einzelheiten und Vorteile des Erfindungsgegenstandes ergeben sich aus der nachfolgenden Beschreibung mehrerer Ausführungsformen anhand der Zeichnungen. Es zeigen:
- Fig. 1: eine mit einem Glattblech versehene Baueinheit in perspektivischer Ansicht,
- Fig. 2: eine mit Trapezblech versehene Baueinheit in perspektivischer Ansicht,
- Fig. 3: einen Stoß zweier benachbarter Baueinheiten im Vertikalschnitt,
- Fig. 4: einen Stoß zweier benachbarter Baueinheiten im Horizontalschnitt,
- Fig. 5: einen abgerundeten Isoliermantel im Bereich einer abgewinkelten Wandung im Vertikalschnitt,
- Fig. 6: einen scharfkantigen Isoliermantel im Bereich einer abgewinkelten Wandung im Vertikalschnitt,
- Fig. 7: einen Isoliermantel mit angeschlossener Abflußrinne,
- Fig. 8: die Ausbildung eines Isoliermantels an einer Ecke im Horizontalschnitt,
- Fig. 9: eine Baueinheit mit darin verlaufender Heizleitung,
- Fig. 10: einen Isoliermantel gemäß einer weiteren Ausführungsform im Vertikalschnitt und
- Fig. 11: eine Ansicht gemäß Fig. 10 mit einem Stoß zweier benachbarter Baueinheiten.

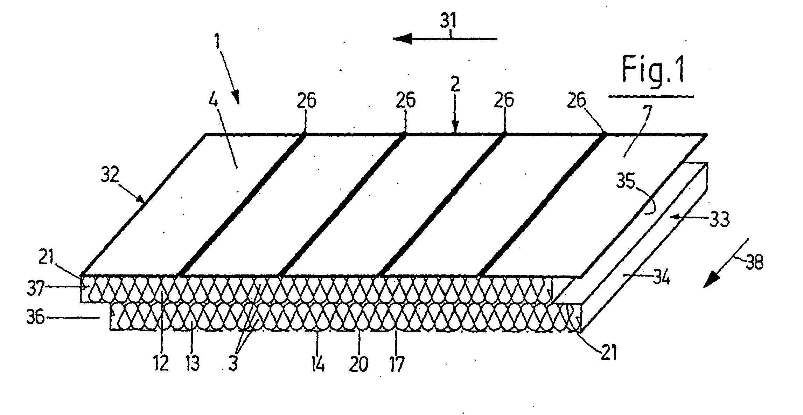

In Fig. 1 ist ein als Baueinheit 2 ausgebildeter Isoliermantel 1 dargestellt, bei dem ein zweilagiger Dämmstoff 3 mit einer Rundumabdeckung 7 versehen ist. Die Rundumabdeckung 7 wird durch die Außenabdeckung 4 auf der Außenseite des Isoliermantels 1, durch das auf der gegenüberliegenden Seite vorgesehene Innenblech 14 sowie durch die Stoßbleche 21 an den seitlichen Stößen des Isoliermantels 1 gebildet. Durch die Rundumabdekkung 7 wird der Baueinheit 2 hohe Stabilität verliehen, die eine einfache Montage ermöglicht und hohen thermischen Belastungen standhält. Es handelt sich bei dem in Fig. 1 dargestellten Isoliermantel 1 um einen mit Glattblech ausgebildeten Isoliermantel 1, der zusätzlich an der Außenseite Profilierungen 26 aufweist, die ein Ausbeulen der Außenabdeckung 4 verhindern. Das Innenblech 14 ist als Lochblech 20 ausgebildet und mit einem zusätzlichen Rieselschutz 17 versehen, welcher aus einem Glasgewebetuch besteht und insbesondere dann eingesetzt wird, wenn an den Isoliermantel 1 zusätzlich hohe Anforderungen hinsichtlich Schallschutz gestellt sind.
Die Baueinheit 2 weist einen rechteckigen Querschnitt auf. In und entgegen einer Horizontal-Richtung 31 ist ein Stoß 32 bzw. 33 vorgesehen. Der Stoß 33 weist an der Unterseite eine entgegen der Horizontal-Richtung 31 vorstehenden Steg 34 auf. Oberhalb des Steges 34 ist eine Längsnut 35 vorgesehen, die nach unten durch den Steg 34 und nach oben durch einen überstehenden Teil der Außenabdeckung 4 begrenzt ist. Die zwei Lagen des Dämmstoffs 3 sind im Bereich des Stegs 34 und der Längsnut 35 von dem Stoßblech 21 eingefaßt. Am in Horizontal-Richtung 31 gelegenen Ende der Baueinheit 2 ist eine zur Unterseite hin offene Ausnehmung 36 vorgesehen, die durch einen darüber angeordneten, in Horizontal-Richtung 31 vorspringenden Steg 37 begrenzt wird. Auch in diesem Bereich sind die zwei Lagen des Dämmstoffs 3 von dem Stoßblech 21 eingefaßt. Die Baueinheit 2 weist auch entlang einer Vertikal-Richtung 38, die senkrecht zur Horizontal-Richtung 31 verläuft, Stöße 32 bzw. 33 auf, die in Fig. 1 nicht dargestellt sind.

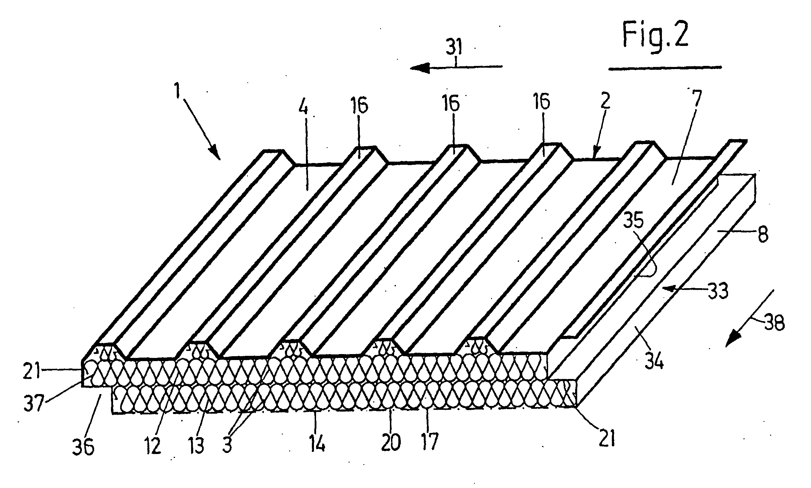

Ein mit trapezförmigen Strukturen an der Außenabdeckung 4 ausgerüsteter Isoliermantel 1 ist in Fig. 2 dargestellt. Die Außenabdeckung 4 ist mit Trapezblechen 16 ausgestattet, wodurch ein Ausbeulen der Außenabdeckung 4 verhindert wird und zudem ein Abfließen des sich auf dieser befindenden Wassers gewährleistet ist. Es ist ferner zu erkennen, daß der Dämmstoff 3 aus zwei Lagen 12 und 13 besteht, wobei diese in Horizontal-Richtung 31 leicht versetzt zueinander angeordnet sind, wodurch sich die Abstufungen am Stoß 8 ergeben. Die Lagen 12 und 13 werden also einfach flächig werksseitig aneinander geklebt oder geheftet, so daß die Ausbildung der Stöße 8 damit vorgegeben wird. Dadurch überlappen sich benachbarte Baueinheiten vorteilhafterweise. Dies bringt konstruktive Vorteile beim Zusammensetzen der Baueinheiten und verhindert gleichzeitig, daß es an benachbarten Baueinheiten zum Entstehen von Wärmebrücken kommen kann. Ansonsten wird auf die Beschreibung der Baueinheit 2 gemäß Fig. 1 verwiesen.

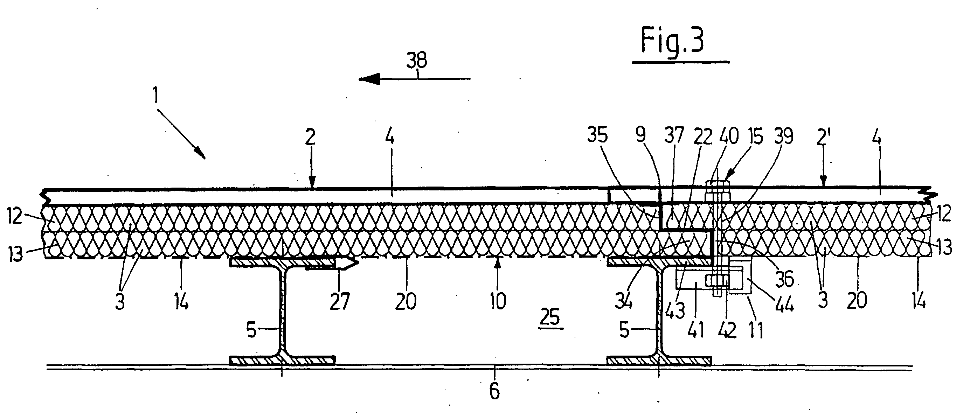

Einen in einen Träger 5 eingehängten Isoliermantel 1 zeigt Fig. 3 gemäß einer Ausführungsform in einem Vertikalschnitt. Zwei Baueinheiten 2 und 2' schließen an einem Vertikalstoß 9 aneinander an. Eine Baueinheit 2 besteht aus dem Dämmstoff 3, der zwei- oder mehrlagig ausgebildet ist, und der Außenabdeckung 4. An der Innenseite 10 ist das als Lochblech 20 ausgebildete Innenblech 14 zu erkennen, welches mit der Außenabdeckung 4 und den Stoßblechen die Rundumabdeckung bildet. An der Innenseite 10 bzw. am Innenblech 14 ist ein Verbinder 11 angeordnet, der ein Einhängen der Baueinheit 2 an den an der Wandung 6 des zu isolierenden Objektes angebrachten Träger 5 ermöglicht. Bei der Isolierung von Elektrofiltern ist dies besonders vorteilhaft, da derartige Träger 5 ohnehin an der Außenwand vorhanden sind und auf diese Weise quasi als Unterkonstruktion mit benutzt werden können. Befestigungen 27 oder andere das Einhaken der Baueinheiten erleichternde Glasfaserabdeckungen können den Trägern 5 zugeordnet sein.

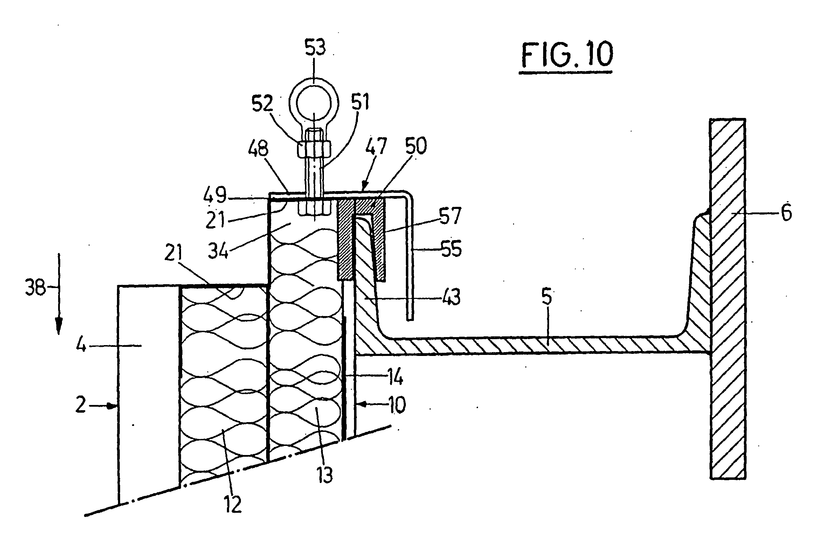

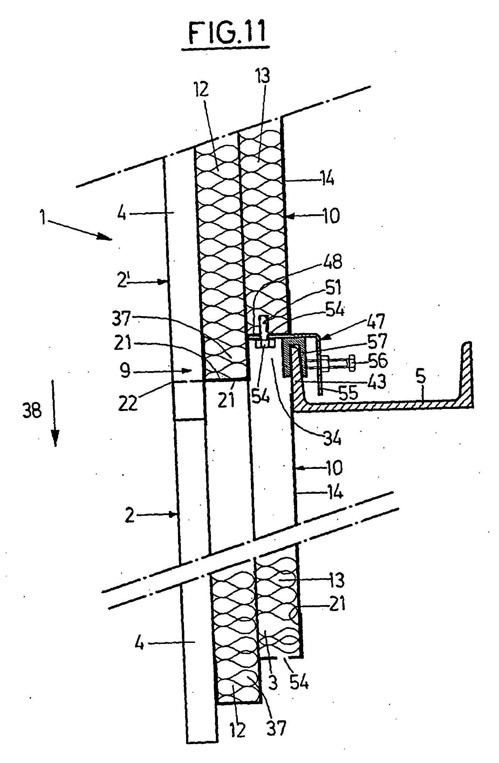

Eine minimale Anzahl von Befestigungsmitteln 15 reicht aus, um Außenabdeckung 4, Dämmstoff 3, Innenblech 14 und Verbinder 11 gemeinsam zu fixieren, wodurch eine Durchdringung des Dämmstoffs 3 so gut wie nicht stattfindet. Am Stoß 9 ist zu erkennen, daß zwischen den benachbarten Baueinheiten 2 und 2' eine Überlappung 22 vorhanden ist, die dadurch erreicht ist, daß die beiden Lagen 12 und 13 versetzt zueinander angeordnet sind. Eine Beeinträchtigung der Isolierwirkung entsteht somit an den Stößen nicht, die Übergänge zwischen benachbarten Baueinheiten 2, 2' stellen keinerlei Schwachstelle dar. Im Bereich der Überlappung 22 greift der Steg 37 in die Längsnut 35 und der Steg 34 in die Ausnehmung 36, so daß eine Verbindung nach Art einer Feder-/Nutverbindung entsteht. Zur Verbindung der Baueinheiten 2 und 2' mit dem Träger 5 weisen der Verbinder 11 und das Befestigungsmittel 15 eine von der Außenseite durch eine Bohrung 39 in der Platte 2' geführte Schraube 40 auf. Auf der Innenseite der Schraube 40 sitzt ein Riegel 41, der mit einer Mutter 42 in Schraubenrichtung festgelegt ist. Der Riegel 42 umgreift einen Schenkel 43 des als Doppel-T-Profil ausgebildeten Trägers 5. Auf der dem Schenkel 43 abgewandten Seite der Schraube 40 ist ein Anschlag 44 vorgesehen, der eine Verdrehung des Riegels 41 beim Anziehen der Schraube 40 verhindert. Die Baueinheiten 2, 2' sind auf den Träger 5 gehängt, so daß der Pfeil der Vertikal-Richtung 38 nach unten weist. Die Verbindung zweier Baueinheiten 2, 2' mit einem Träger 5 über eine Schraube 40, die eine Baueinheit 2 bzw. 2' von außen nach innen durchdringt, wird primär verwendet, wenn die Träger 5 nicht exakt parallel zueinander verlaufen und somit eine Verspannung der Baueinheiten 2, 2' in Richtung auf die Träger 5 erforderlich ist. Liegen die Träger 5 exakt parallel übereinander, so ist eine Verbindung der Baueinheiten 2 an dem jeweiligen Träger 5 nach dem in Fig. 10 und 11 dargestellten Einhängeprinzip bevorzugt.

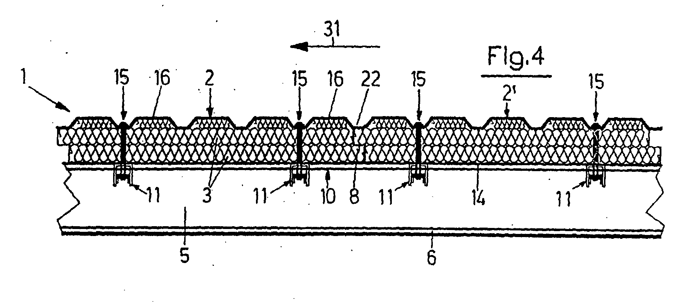

Fig. 4 zeigt einen horizontalen Schnitt durch eine weitere Ausführungsform mit einem Isoliermantel 1, wobei der Stoß 8 zwischen den beiden Baueinheiten 2 und 2' zu erkennen ist. Über die Verbinder 11 sind die jeweiligen Baueinheiten 2, 2' in den Träger 5 eingehängt. Die Befestigungsmittel 15, wie Bolzen oder Schrauben, fixieren die als Trapezblech 16 ausgebildete Außenabdeckung 4, den zweilagigen Dämmstoff 3 sowie das Innenblech 14 an der Innenseite 10 des Isoliermantels 1. Dabei sind die Befestigungsmittel 15 in der Nähe der Überlappung 22 am Stoß 8 angebracht, um zu verhindern, daß es hier zu Verschiebungen kommt und einen festen Sitz der benachbarten Baueinheiten 2 und 2' zu gewährleisten. In Fig. 3 und Fig. 4 ist gut zu erkennen, daß sich zwischen Innenseite 10 und Wandung 6 eine Art Wärmeausgleichskanal 25 bildet, der die Hinterlüftung der Gesamtkonstruktion gewährleistet. Neben dieser weitergehenden Isolierung ist damit auch eine Verwitterung des Isoliermantels 1 wirksam verhindert. Neben Standardmodulen können mit dem erfindungsgemäßen Isoliermantel auch Ecken, Kanten, Rundungen oder Öffnungen isoliert werden. Hinsichtlich der Verbindung der Baueinheiten 2, 2' mit den Trägem 5 wird auf die Beschreibung zu Fig. 3 verwiesen. Hinsichtlich des Detailaufbaus einer Baueinheit 2 wird insbesondere auf die Beschreibung zu Fig. 2 verwiesen.

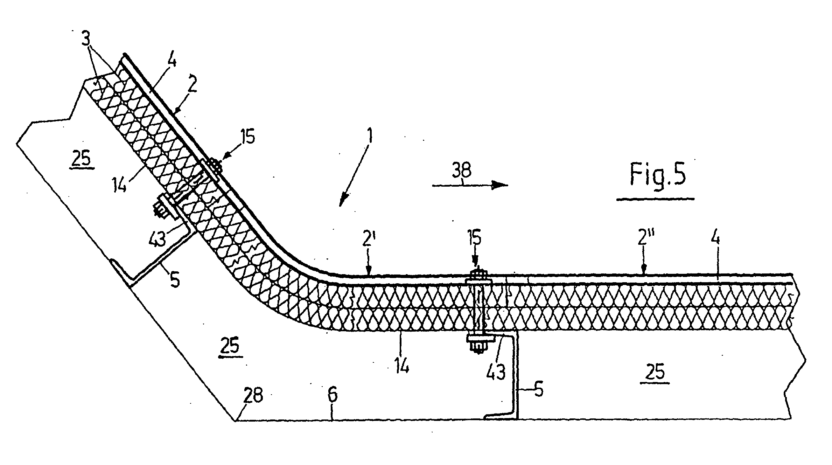

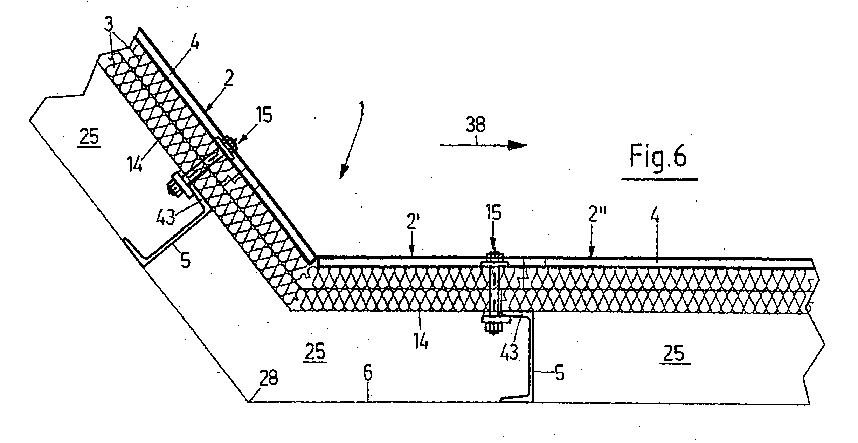

Gemäß einer weiteren Ausführungsform zeigt Fig. 5 eine Wandung 6 mit einer Ecke 28, die mit einem abgerundeten Isoliermantel 1 verkleidet ist. Hier wird die flexible Handhabbarkeit des erfindungsgemäßen Isoliersystems besonders deutlich, wobei in der Darstellung gemäß Fig. 6 dieselbe Aufgabe mit einem eckig ausgeführten Isoliermantel 1 gelöst ist. Zu Wärmeverlusten kommt es an diesen bisher äußerst problematischen Stellen nicht mehr. Die Träger 5 weisen hier ein U-förmiges Profil auf, in das die Verbinder 11 eingehängt sind. Außenabdeckung 4, Dämmstoff 3 und Innenblech 14 sind über das Verbindungsmittel 15 fixiert. Der Wärmeausgleichskanal 25 sorgt für eine Hinterlüftung des Isoliermantels 1.

In Fig. 6 ist eine weitere Ausführungsform dargestellt, die der gemäß Fig. 5 ähnelt, allerdings in einer leicht abgewandelten, abgekanteten Ausführung. Derartige Ausführungen können bereits werksseitig vorgefertigt sein oder notfalls auch auf der Baustelle zugeschnitten werden.

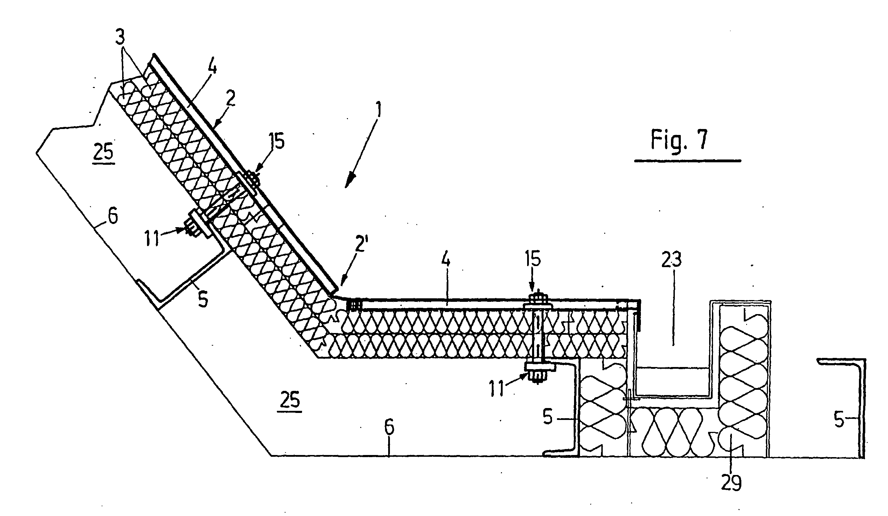

Eine weitere Ausführungsform gemäß Fig. 7 zeigt, daß der Anschluß von Zusatzbauteilen, wie Abflußrinnen 23 mit dem erfindungsgemäßen Isoliermantel 1 leicht durchführbar ist. Hier wird der Träger 5 gleichzeitig für die der Abflußrinne 23 zugeordnete Zusatzdämmung 29 mitverwendet.

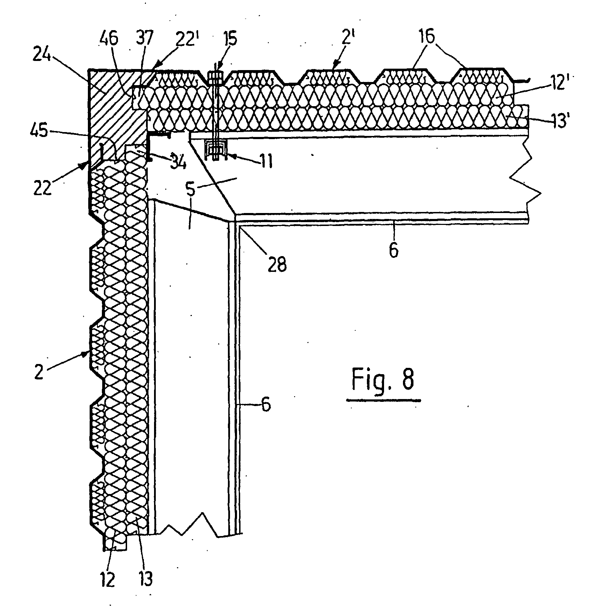

Eine rechtwinklig ausgebildete Ecke 28 ist in der in Fig. 8 dargestellten Ausführungsform zu erkennen. Hier stoßen zwei Baueinheiten 2 und 2' aneinander, die über ein Paßstück 24 verbunden werden. Das Paßstück 24 weist entsprechende Nuten 45, 46 auf, um die versetzt zueinander angeordneten Lagen 12, 13 und 12', 13' aufzunehmen. Die Stege 34 und 37 greifen in die Nuten 45 bzw. 46 ein. Somit bilden sich zwischen Baueinheit 2 und Paßstück 24 bzw. Baueinheit 2' und Paßstück 24 entsprechende Überlappungen 22 bzw. 22'.

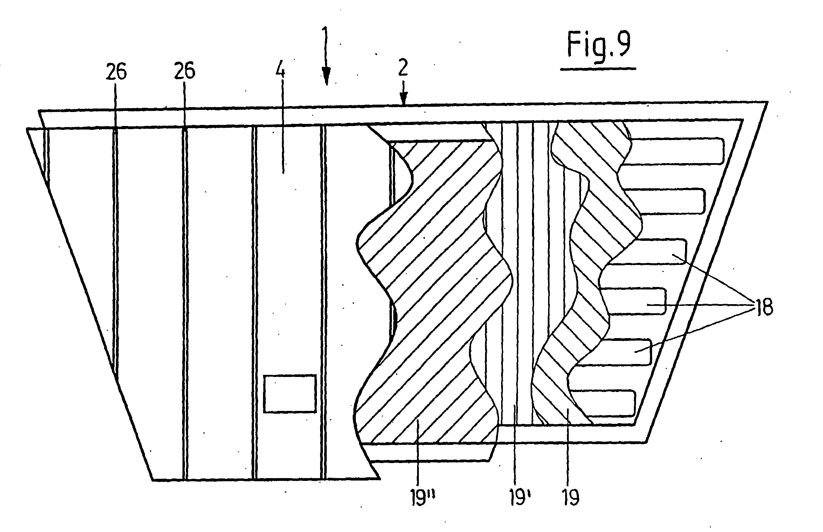

Um ein Anbacken aus Gasen gelöster Schwebstoffe zu verhindern, sieht eine weitere Ausführungsform gemäß Fig. 9 vor, daß Heizleitungen 18 innerhalb eines Isoliermantels 1 angeordnet sind. Die Heizleitungen 18 werden mit Folien 19, 19', 19" ummantelt oder abgedeckt. Der Isoliermantel 1 kann somit auf eine vorgegebene Temperatur aufgeheizt werden. Auch die mit Heizleitungen 18 ausgerüsteten Isoliermäntel 1 können somit vorteilhafterweise bereits werksseitig hergestellt sein und müssen auf der Baustelle nur entsprechend angeschlossen werden.

In den Fig. 10 und 11 ist eine weitere Ausführungsform der Erfindung dargestellt. Die Baueinheit 2 weist an ihrem oberen, d. h. entgegen der Vertikal-Richtung 38 gelegenen Ende einen L-förmigen Haken 47 auf. Ein Schenkel 48 des Hakens 47 ist mit der stirnseitigen Fläche 49 des Steges 34 verbunden. An der dem Steg 34 zugewandten Seite des Schenkels 48 ist vor dem Innenblech 14 ein Profil 50 mit einem U-förmigen in Richtung 38 offenen Querschnitt vorgesehen, das aus einem thermisch nicht leitenden Material, insbesondere einer Silikonmischung, besteht. Eine Schraube 51 ist von innen durch eine Ausnehmung in dem Stoßblech 21 und dem Schenkel 48 gesteckt und weist mit ihrem gewindeseitigen Ende entgegen der Vertikal-Richtung 38. Die Schraube ist am Stoßblech 21 befestigt. Zum Transport und Einhängen der Baueinheit 2 wird auf die Schraube 51 eine Mutter 52 mit einem Auge 53 geschraubt, so daß die Baueinheit 2 mit einem Hebezeug, das in das Auge 53 eingreift, auf den Schenkel 43 des Trägers 5 von oben herabgelassen und eingehängt werden kann, bis der Schenkel 43, wie in Fig. 10 dargestellt, in Eingriff mit der Innenseite des Profils 50 kommt. Anschließend wird die Mutter 52 entfernt und, wie in Fig. 11 dargestellt, eine weitere Baueinheit 2" von oben auf die Baueinheit 2 herabgelassen. Hierbei kommen die beiden Stege 34 und 37 der beiden Baueinheiten 2 bzw. 2' in Eingriff mit den entsprechenden Ausnehmungen der jeweils gegenüberliegenden Baueinheiten. Am jeweiligen unteren, d. h. in Richtung 38, gelegenen Ende der Baueinheiten 2 und 2' ist in dem Stoßblech 21, das die Lage 13 nach unten begrenzt, eine Ausnehmung 54 vorgesehen, die von radial nach außen laufenden Schlitzen umgeben ist und deren Durchmesser geringfügig kleiner ist als der Außendurchinesser der Schraube 51. Beim Absetzen der Baueinheit 2' auf die Baueinheit 2 kommt die Schraube 51 in Eingriff mit der Ausnehmung 54, wobei diese geringfügig aufgebogen wird und somit eine Paßsitz-Verbindung zwischen den beiden Baueinheiten 2 und 2' entsteht. Der Haken 47 weist einen zweiten Schenkel 55 auf, der rechtwinklig zu dem anderen Schenkel 48 verläuft. In dem Schenkel 55 ist eine Stellschraube 56 in einem Gewinde drehbar gelagert, die gegenüber dem in den Fig. 10 und 11 rechts dargestellten Profilschenkel 57 des Profils 50 anliegt. Durch ein Verdrehen der Stellschraube 56 kann der Druck auf den Profilschenkel 57 des Profils 50 verändert werden, wodurch der Paßsitz zwischen dem Schenkel 43 des Trägers 5 und dem Profil 50 vor dem Einhängen der jeweiligen Baueinheit 2 bzw. 2' eingestellt werden kann. Eine nachträgliche Justierung, d. h. nach dem Einhängen der jeweiligen Baueinheit 2 bzw. 2', ist ebenfalls möglich. Vorteilhaft an der in den Fig. 10 und 11 dargestellten Befestigung der Baueinheiten 2 bzw. 2' an einem Träger 5 ist, daß keine wärmeleitende Verbindung, z. B. in Form einer Schraube, von der Außenseite der Baueinheit 2 bzw. 2' zur Innenseite derselben vorliegt. Auf diese Weise kann die Isolation stark verbessert werden. Durch die Verbindung der Schraube 51 der Baueinheit 2 mit der Ausnehmung 54 der Baueinheit 2' wird eine Arretierung quer zur Vertikal-Richtung 38 erreicht. Lediglich in dem Fall, daß die Träger 5 schief zueinander liegen, wird die Verbindung der Baueinheiten 2 mit der Wand 6 gemäß Fig. 3 verwendet. Die Einheit aus Haken 47, Profil 50 und Stellschraube 56 wird als Verbinder 11' bezeichnet.

## Patentansprüche

1. Isoliermantel (1) für Wandungen (6), die mit flüssigen oder gasförmigen Medien hoher Temperatur in Kontakt stehen, insbesondere für Gehäuse von Elektrofiltern, bestehend aus einem Dämmstoff (3), einer vor allem gegen Feuchtigkeit absichernden Außenabdeckung (4) und Verbindern zur Fixierung an der Wandung (6), wobei Dämmstoff (3), Außenabdeckung (4) und Verbinder jeweils eine Baueinheit (2, 2') bildend ausgeführt sind, die über die Verbinder mit der Wandung (6) zugeordneten Trägern (5) koppelbar ist und die mit Stößen (8, 9) eine Überlappung (22) mit benachbarten Baueinheiten (2, 2') ergebend ausgebildet ist, **dadurch gekennzeichnet, daß**
- die Verbinder einen L-förmigen Querschnitt zum Einhängen der Baueinheiten (2, 2') an den Trägern (5) aufweisen, und
- an jeder Baueinheit (2, 2') eine den Verbinder durchgreifende Schraube (51) zum Transportieren der Baueinheit (2, 2') und zum Eingreifen in eine entsprechende Ausnehmung (54) einer benachbarten Baueinheit (2, 2') vorgesehen ist.

2. Isoliermantel nach Anspruch 1, **dadurch gekennzeichnet,**
**daß** der Dämmstoff (3) über eine Rundumabdeckung (7) stabilisiert ist, vorzugsweise durch mit der Außenabdeckung (4) verbundene Stoßbleche (21) und Innenbleche (14).

3. Isoliermantel nach einem der vorhergehenden Ansprüche, **dadurch gekennzeichnet,**
**daß** die Stöße (8, 9) benachbarter Baueinheiten (2) eine Feder-/Nutverbindung ergebend ausgebildet sind.

4. Isoliermantel nach einem der vorhergehenden Ansprüche, **dadurch gekennzeichnet,**
**daß** die Stöße (8, 9) stufenartig ineinandergreifend ausgebildet sind.

5. Isoliermantel nach einem der vorhergehenden Ansprüche, **dadurch gekennzeichnet,**
**daß** der Dämmstoff (3) zweilagig ausgebildet ist, wobei beide Lagen (12, 13) leicht zueinander versetzt angeordnet sind und somit an den Stößen (8, 9) der Baueinheit (2) eine stufenartige Ausbildung ergeben.

6. Isoliermantel nach einem der vorhergehenden Ansprüche, **dadurch gekennzeichnet,**
**daß** der Dämmstoff (3) mindestens aus zwei Lagen (12, 13) besteht, wobei der Verbinder nur mit der der Wandung (6) zugewandten Lage (13) verbunden ist.

7. Isoliermantel gemäß Anspruch 6, **dadurch gekennzeichnet,**
**daß** der Verbinder am oberen Ende der der Wandung (6) zugewandten Lage (13) befestigt ist.

8. Isoliermantel nach einem der vorhergehenden Ansprüche, **dadurch gekennzeichnet,**
**daß** am oberen Ende der der Wandung (6) zugewandten Lage (13) die den Verbinder durchgreifende Schraube (51) befestigt ist.

9. Isoliermantel nach einem der vorhergehenden Ansprüche, **dadurch gekennzeichnet,**
**daß** am unteren Ende der der Wandung (6) zugewandten Lage (13) in dem Stoßblech (21) die Ausnehmung (54) vorgesehen ist.

## Claims

1. Insulating jacket (1) for walls (6) that are in contact with fluid or gaseous media of high temperature, in particular for casings of electrostatic filters, comprising an insulating material (3), an outer lining (4) that safeguards in particular against humidity, and connectors for fixation to the wall (6), with the insulating material (3), outer lining (4) and connectors being designed in the form of a constructional unit (2, 2') which, by way of the connectors, can be coupled with supports (5) that are allocated to the wall (6) and which is designed to have joints (8, 9), forming an overlap (22) with adjoining constructional units (2, 2'), **characterized**
- **in that** the connectors have a cross-sectional shape in the form of an L for suspension of the constructional units (2, 2') on supports (5); and
- **in that** each constructional unit (2, 2') is provided with a screw (51) that passes through the connector for transportation of the constructional unit (2, 2') and for engagement with a corresponding recess (54) of an adjoining constructional unit (2, 2').

2. Insulating jacket according to claim 1, **characterized in that** the insulating material (3) is stabilized by an all around cover (7), preferably by metal plate inserts (14) and joint plates (21) that are connected to the outer lining (4).

3. Insulating jacket according to one of the preceding claims, **characterized in that** the joints (8, 9) of adjoining constructional units (2) are designed for forming a tongue and groove joint.

4. Insulating jacket according to one of the preceding claims, **characterized in that** the joints (8, 9) are designed for stepwise engagement.

5. Insulating jacket according to one of the preceding claims, **characterized in that** the insulating material (3) is two-layered, with both layers (12, 13) being slightly misaligned one relative to the other, resulting in a stepwise design at the joints (8, 9) of the constructional unit (2).

6. Insulating jacket according to one of the preceding claims, **characterized in that** the insulating material (3) is comprises of at least two layers (12, 13), with the connector being joined only to the layer (13) that is turned towards the wall (6).

7. Insulating jacket according to claim 6, **characterized in that** the connector is mounted on the top end of the layer (13) that is turned towards the wall (6).

8. Insulating jacket according to one of the preceding claims, **characterized in that** the screw (51) that passes through the connector is mounted on the top end of the layer (13) that is turned towards the wall (6).

9. Insulating jacket according to one of the preceding claims, **characterized in that** the recess (54) is provided in the joint plate (21) at the bottom end of the layer (13) that is turned towards the wall (6).

## Revendications

1. Enveloppe isolante (1) destinée à des parois (6) qui sont en contact avec des milieux liquides ou gazeux à haute température, notamment à des enceintes d'électrofiltres, constituée d'une matière isolante (3), d'un revêtement extérieur (4) assurant principalement une protection contre l'humidité et d'attaches pour la fixation à la paroi (6), la matière isolante (3), le revêtement extérieur (4) et les attaches étant réalisés en formant une unité de construction (2, 2'), qui peut être couplée à des supports (5) associés à la paroi (6) par l'intermédiaire des attaches, et qui est réalisée avec des jonctions (8, 9) engendrant un recouvrement (22) avec des unités de construction (2, 2') adjacentes, **caractérisée en ce que**
- les attaches ont une section transversale en forme de L pour l'accrochage des unités de construction (2, 2') aux supports (5), et
- une vis (51) traversant l'attache est prévue sur chaque unité de construction (2, 2') pour le transport de l'unité de construction (2, 2'), et pour l'insertion dans un évidement (54) correspondant d'une unité de construction (2, 2') adjacente.

2. Enveloppe isolante selon la revendication 1, **caractérisée en ce que**
la matière isolante (3) est stabilisée par un revêtement périphérique (7), de préférence par des tôles de jonction (21) et des tôles intérieures (14) reliées au revêtement extérieur (4).

3. Enveloppe isolante selon l'une des revendications précédentes, **caractérisée en ce que**
les jonctions (8, 9) d'unités de construction (2) adjacentes sont réalisées de façon à engendrer une liaison par rainure et languette.

4. Enveloppe isolante selon l'une quelconque des revendications précédentes, **caractérisée en ce que**
les jonctions (8, 9) sont réalisées de façon à s'interpénétrer sous forme de gradins.

5. Enveloppe isolante selon l'une quelconque des revendications précédentes, **caractérisée en ce que**
la matière isolante (3) comporte deux couches, les deux couches (12, 13) étant disposées en étant légèrement décalées l'une par rapport à l'autre, et conduisant de ce fait à un agencement de type gradins au niveau des jonctions (8, 9) de l'unité de construction (2).

6. Enveloppe isolante selon l'une quelconque des revendications précédentes, **caractérisée en ce que**
la matière isolante (3) est constituée d'au moins deux couches (12, 13), l'attache n'étant reliée qu'à la couche (13) orientée vers la paroi (6).

7. Enveloppe isolante selon la revendication 6, **caractérisée en ce que**
l'attache est fixée au niveau de l'extrémité supérieure de la couche (13) orientée vers la paroi (6).

8. Enveloppe isolante selon l'une quelconque des revendications précédentes, **caractérisée en ce que**
la vis (51) traversant l'attache est fixée au niveau de l'extrémité supérieure de la couche (13) orientée vers la paroi (6).

9. Enveloppe isolante selon l'une quelconque des revendications précédentes, **caractérisée en ce que**
l'évidement (54) pratiqué dans la tôle de jonction (21) est prévu au niveau de l'extrémité inférieure de la couche (13) orientée vers la paroi (6).
